# EUROPEAN PATENT APPLICATION

(11) **EP 4 084 535 A1**
(43) Date of publication of application: **02.11.2022**
(21) Application number: 20906239.7
(22) Date of filing: 02.09.2020
(51) Int. Cl.: H04W 52/02

(54) **INFORMATION PROCESSING METHOD AND APPARATUS, AND DEVICE AND COMPUTER READABLE STORAGE MEDIUM**

(30) Priority: 27.12.2019 CN 201911377920
(71) Applicant: Datang Mobile Communications Equipment Co., Ltd., Beijing 100085 (CN)
(72) Inventor: ZHAO, Yali, Beijing 100083 (CN)
(74) Representative: Studio Torta S.p.A.
(86) International application number: PCT/CN2020/113019
(87) International publication number: WO 2021/128925

(57) **Abstract**

An information processing method, a device, an apparatus, and a computer readable storage medium are provided, related to the technical field of communication, so as to save the electric quantity of relay UE. The method includes the following steps: sending assistant information to a second relay UE through a direct communication interface, where the assistant information is configured to enable the second relay UE to enable or disable a relay function of the second relay UE.

## Description

### CROSS REFERENCE OF RELATED APPLICATION

The present application claims a priority of Chinese patent application No. 201911377920.4 filed on December 27, 2019, which is incorporated herein by reference in its entirety.

### TECHNICAL FIELD

The present disclosure relates to the field of communications technologies, and in particular, to an information processing method, a device, an apparatus, and a computer readable storage medium.

### BACKGROUND

As shown in Fig. 1, the conventional wireless communication adopts a cellular network communication mode, that is, a terminal and a network side device perform uplink and downlink data/control information transmission through a Uu interface. As shown in Fig. 2, direct communication refers to a manner in which a neighboring terminal can perform data transmission through a direct communication link (also referred to as bypass) in a short range. The wireless interface to which the Sidelink link corresponds is referred to as a direct communication interface, also referred to as a Sidelink interface. In order to expand Network coverage in a wireless communication system, as shown in Fig. 3, a UE-to-Network relay (UE-to-Network relay) is introduced. Meanwhile, in order to extend the coverage of direct communication, as shown in Fig. 4, a UE-to-UE relay (UE-to-UE relay) is introduced. Currently, for a UE-to-Network relay (UE-to-Network relay), the relay is always turned on after meeting a relay turn-on condition, which is not favorable for saving power for the relay UE.

### SUMMARY

The embodiment of the disclosure provides an information processing method, a device, an apparatus, and a computer readable storage medium, so as to save the electric quantity of relay UE.

In a first aspect, an embodiment of the present disclosure provides an information processing method, which is applied to a first relay UE, and the method includes: sending assistant information to a second relay UE through a direct communication interface, where the assistant information is configured to enable the second relay UE to enable or disable a relay function of the second relay UE.

The assistant information includes one or more of:
location information of the first relay UE;
a moving speed of the first relay UE;
a power of the first relay UE;
a load of the first relay UE;
a relay intention of the first relay UE;
identification information of a target relay UE;
information about a target relay UE enabling or disabling a relay function;
where the target relay UE is a relay UE of which the relay function is indicated by the first relay UE to be enabled or disabled.

The sending the assistant information to the second relay UE through the direct communication interface includes:
sending the assistant information to the second relay UE through the direct communication interface in a case that one or more of the following triggering conditions are met;
where the triggering conditions include:
   a distance of a location change of the first relay UE exceeds a first threshold;
   a change in a moving speed of the first relay UE exceeds a second threshold;
   the power of the first relay UE is lower than a third threshold;
   a change in the power of the first relay UE exceeds a fourth threshold;
   a relay intention of the first relay UE is changed;
   identification information of a target relay UE is changed;
   information about a target relay UE enabling or disabling a relay function is changed;
   a period of sending the assistant information is satisfied.

The sending the assistant information to the second relay UE through the direct communication interface includes:
sending the assistant information to the second relay UE through the direct communication interface in a case that the triggering condition is satisfied and the direct communication interface has available resources; or
sending the assistant information to the second relay UE through the direct communication interface in a case that the triggering condition is satisfied and the direct communication interface has a dedicated resource available for sending the assistant information.

The period for sending the assistant information is configured by a network side or preconfigured;
the dedicated resource for sending the assistant information is configured by a network side or the dedicated resource for sending the assistant information is preconfigured.

In a second aspect, an embodiment of the present disclosure further provides an information processing method, which is applied to a second relay UE, and the method includes:
receiving assistant information sent by first relay UE through a direct communication interface; and
disabling a relay function of the second relay UE according to the assistant information, or enabling the relay function of the second relay UE according to the assistant information.

The assistant information includes one or more of:
location information of the first relay UE;
a moving speed of the first relay UE;
a power of the first relay UE;
a load of the first relay UE;
a relay intention of the first relay UE;
identification information of a target relay UE;
information about a target relay UE enabling or disabling a relay function;
where the target relay UE is a relay UE of which the relay function is indicated by the first relay UE to be enabled or disabled.

The disabling the relay function of the second relay UE according to the assistant information includes:
in a case that a requirement of relay disabling is determined to be met according to the assistant information, disabling the relay function;
the enabling the relay function of the second relay UE according to the assistant information includes:
   in a case that a requirement of relay enabling is determined to be met according to the assistant information, enabling the relay function.

The disabling the relay functionality includes:
immediately disabling the relay function; or
generating a random number in [M, N]; in a case that the random number is less than or equal to a preset threshold P, or in a case that the random number is greater than or equal to the preset threshold P, disabling the relay function; where M >0, N >0, P >0, M < P < N.

Prior to the disabling the relay function of the second relay UE according to the assistant information, the method further includes:
sending a first message to a target UE, where the first message is configured to notify the target UE to perform a relay reselection.

The enabling the relay function includes:
immediately enabling a relay function;
in a case that a relay enabling condition configured by the network side is met, immediately enabling the relay function; or
generating a random number in [M, N]; in a case that the random number is less than or equal to a preset threshold P, or in a case that the random number is greater than or equal to the preset threshold P, enabling the relay function; or
generating a random number in [M, N] in a case that a relay enabling condition configured by the network side is met; in a case that the random number is less than or equal to a preset threshold P, or in a case that the random number is greater than or equal to the preset threshold P, enabling the relay function;
where M >0, N >0, P >0, M < P < N.

In a case that the relay function is enabled, the method further includes at least one of: sending a broadcast message, where the broadcast message is configured to indicate that the relay function is enabled;
receiving a relay request message;
sending the assistant information of the second relay UE to other relay UEs.

In a third aspect, an embodiment of the present disclosure provides an information processing method, which is applied to a UE, and the method includes:
receiving a first message sent by a second relay UE;
performing a relay reselection according to the first message;
where the first message is sent by the second relay UE before the relay function is disabled according to the assistant information sent by the first relay UE.

In a fourth aspect, an embodiment of the present disclosure provides an information processing device, applied to a first relay UE, where the device includes:
a first sending module, configured to send assistant information to a second relay UE through a direct communication interface, where the assistant information is configured to enable the second relay UE to enable or disable a relay function of the second relay UE.

The assistant information includes one or more of:
location information of the first relay UE;
a moving speed of the first relay UE;
a power of the first relay UE;
a load of the first relay UE;
a relay intention of the first relay UE;
identification information of a target relay UE;
information about a target relay UE enabling or disabling a relay function;
where the target relay UE is a relay UE of which the relay function is indicated by the first relay UE to be enabled or disabled.

In a fifth aspect, an embodiment of the present disclosure provides an information processing device, which is applied to a second relay UE, and the device includes:
a first receiving module, configured to receive assistant information sent by first relay UE through a direct communication interface;
a first processing module, configured to disable a relay function of the second relay UE according to the assistant information, or enabling the relay function of the second relay UE according to the assistant information.

The assistant information includes one or more of:
location information of the first relay UE;
a moving speed of the first relay UE;
a power of the first relay UE;
a load of the first relay UE;
a relay intention of the first relay UE;
identification information of a target relay UE;
information about a target relay UE enabling or disabling a relay function;
where the target relay UE is a relay UE of which the relay function is indicated by the first relay UE to be enabled or disabled.

In a sixth aspect, an embodiment of the present disclosure provides an information processing method, which is applied to a UE, and the method includes:
a first receiving module, configured to receive a first message sent by a second relay UE;
a first processing module, configured to perform a relay reselection according to the first message;
where the first message is sent by the second relay UE before the relay function is disabled according to the assistant information sent by the first relay UE.

In a seventh aspect, an embodiment of the present disclosure provides an information processing device, applied to a first relay UE, including: a transceiver, a memory, a processor, and a program stored on the memory and executable on the processor; the processor is configured to read the program in the memory to perform:
the processor is configured to read the program in the memory to perform:
sending assistant information to a second relay UE through a direct communication interface, where the assistant information is configured to enable the second relay UE to enable or disable a relay function of the second relay UE.

The assistant information includes one or more of:
location information of the first relay UE;
a moving speed of the first relay UE;
a power of the first relay UE;
a load of the first relay UE;
a relay intention of the first relay UE;
identification information of a target relay UE;
information about a target relay UE enabling or disabling a relay function;
where the target relay UE is a relay UE of which the relay function is indicated by the first relay UE to be enabled or disabled.

The processor is configured to read the program in the memory to perform:
sending the assistant information to the second relay UE through the direct communication interface in a case that one or more of the following triggering conditions are met;
where the triggering conditions include:
   a distance of a location change of the first relay UE exceeds a first threshold;
   a change in a moving speed of the first relay UE exceeds a second threshold;
   the power of the first relay UE is lower than a third threshold;
   a change in the power of the first relay UE exceeds a fourth threshold;
   a relay intention of the first relay UE is changed;
   identification information of a target relay UE is changed;
   information about a target relay UE enabling or disabling a relay function is changed;
   a period of sending the assistant information is satisfied.

The processor is configured to read the program in the memory to perform:
sending the assistant information to the second relay UE through the direct communication interface in a case that the triggering condition is satisfied and the direct communication interface has available resources; or
sending the assistant information to the second relay UE through the direct communication interface in a case that the triggering condition is satisfied and the direct communication interface has a dedicated resource available for sending the assistant information.

The period for sending the assistant information is configured by a network side or preconfigured;
the dedicated resource for sending the assistant information is configured by a network side or the dedicated resource for sending the assistant information is preconfigured.

In an eighth aspect, an embodiment of the present disclosure provides an information processing device, applied to a second relay UE, including: a transceiver, a memory, a processor, and a program stored on the memory and executable on the processor; the processor is configured to read the program in the memory to perform:
receiving assistant information sent by first relay UE through a direct communication interface; and
disabling a relay function of the second relay UE according to the assistant information, or enabling the relay function of the second relay UE according to the assistant information.

The assistant information includes one or more of:
location information of the first relay UE;
a moving speed of the first relay UE;
a power of the first relay UE;
a load of the first relay UE;
a relay intention of the first relay UE;
identification information of a target relay UE;
information about a target relay UE enabling or disabling a relay function;
where the target relay UE is a relay UE of which the relay function is indicated by the first relay UE to be enabled or disabled.

The processor is configured to read the program in the memory to perform:
in a case that a requirement of relay disabling is determined to be met according to the assistant information, disabling the relay function;
in a case that a requirement of relay enabling is determined to be met according to the assistant information, enabling the relay function.

The processor is configured to read the program in the memory to perform: immediately disabling the relay function; or
generating a random number in [M, N]; in a case that the random number is less than or equal to a preset threshold P, or in a case that the random number is greater than or equal to the preset threshold P, disabling the relay function; where M >0, N >0, P >0, M < P < N.

The processor is configured to read the program in the memory to perform:
sending a first message to a target UE, where the first message is configured to notify the target UE to perform a relay reselection.

The processor is configured to read the program in the memory to perform: immediately enabling a relay function;
in a case that a relay enabling condition configured by the network side is met, immediately enabling the relay function; or
generating a random number in [M, N]; in a case that the random number is less than or equal to a preset threshold P, or in a case that the random number is greater than or equal to the preset threshold P, enabling the relay function; or
generating a random number in [M, N] in a case that a relay enabling condition configured by the network side is met; in a case that the random number is less than or equal to a preset threshold P, or in a case that the random number is greater than or equal to the preset threshold P, enabling the relay function;
where M >0, N >0, P >0, M < P < N.

The processor is further configured to read a program in the memory and perform at least one of:
sending a broadcast message, where the broadcast message is configured to indicate that the relay function is enabled;
receiving a relay request message;
sending the assistant information of the second relay UE to other relay UEs.

In a ninth aspect, an embodiment of the present disclosure provides an information processing device, applied to a UE, including: a transceiver, a memory, a processor, and a program stored on the memory and executable on the processor; the processor is configured to read the program in the memory to perform:
receiving a first message sent by a second relay UE;
performing a relay reselection according to the first message;
where the first message is sent by the second relay UE before the relay function is disabled according to the assistant information sent by the first relay UE.

In a tenth aspect, the disclosed embodiments provide a computer-readable storage medium for storing a computer program, which when executed by a processor, implements the steps in the information processing method according to the first aspect; alternatively, the steps in the information processing method according to the second aspect are implemented; alternatively, the steps in the information processing method according to the third aspect are implemented.

In the embodiment of the present disclosure, the relay UE may dynamically enable or disable the relay function based on the assistant information, so that the power consumption of the relay UE may be reduced.

### BRIEF DESCRIPTION OF THE DRAWINGS

In order to more clearly illustrate the technical solutions of the embodiments of the present disclosure, the drawings required to be used in the description of the embodiments of the present disclosure will be briefly introduced below, and it is apparent that the drawings in the following description are only some embodiments of the present disclosure, and it is obvious for those skilled in the art that other drawings may be obtained according to the drawings without inventive labor.

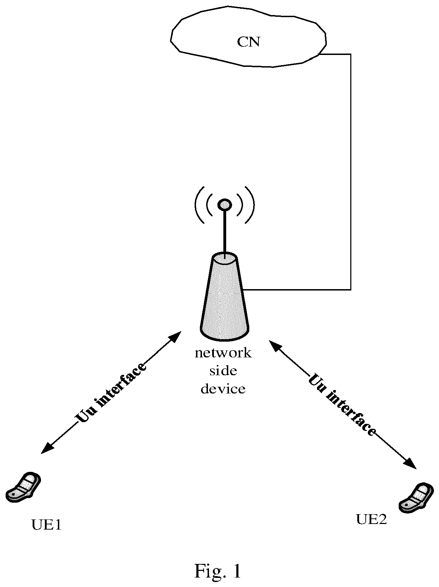

Fig. 1 is a schematic diagram of a communication manner of wireless communication in the related art;

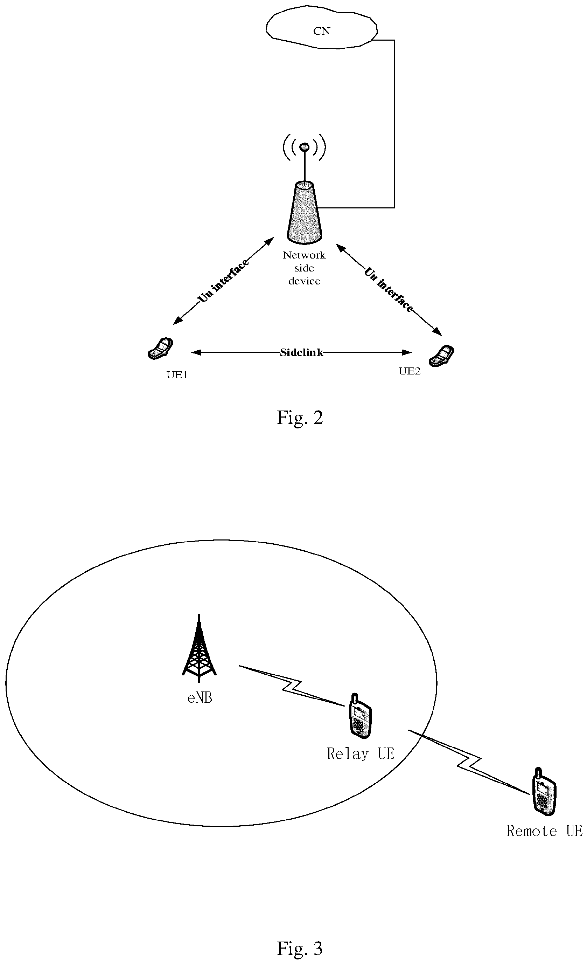

Fig. 2 is a diagram of direct communication in the related art;
Fig. 3 is a schematic view of a UE-to-Network relay in the related art;

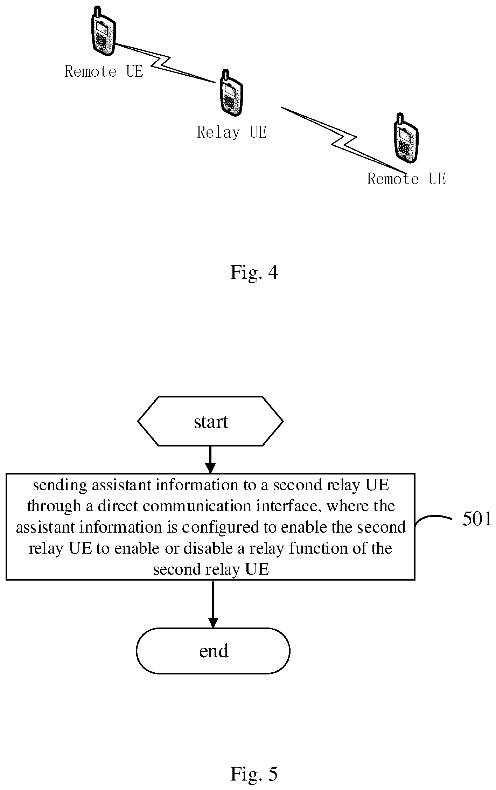

FIG. 4 is a diagram illustrating a UE-to-UE relay scenario in the related art;
Fig. 5 is a flowchart of an information processing method provided by an embodiment of the present disclosure;

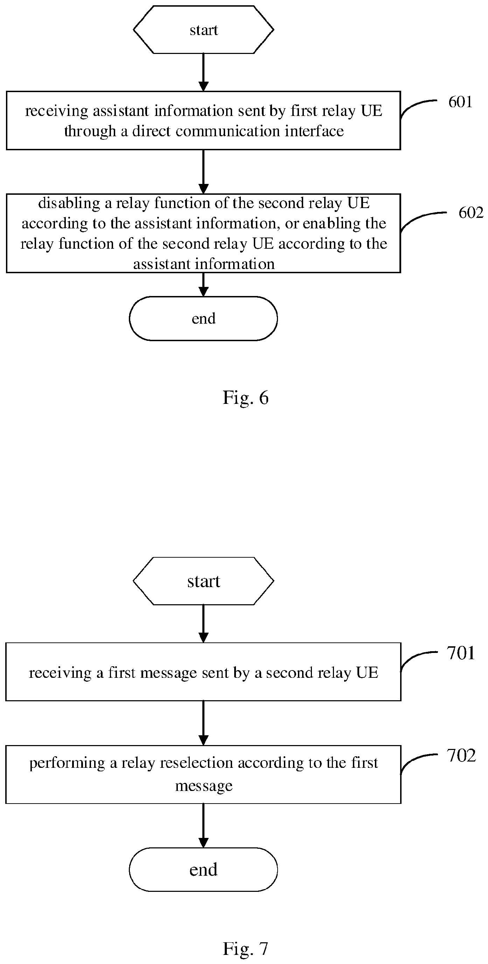

Fig. 6 is a second flowchart of an information processing method provided in the embodiment of the present disclosure;
Fig. 7 is a third flowchart of an information processing method provided by the embodiment of the disclosure;

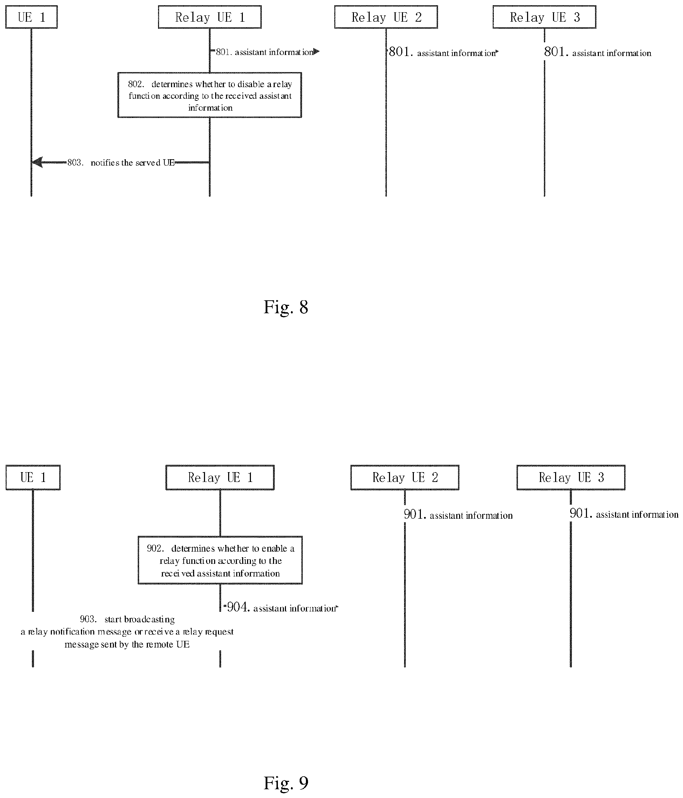

Fig. 8 is a fourth flowchart of an information processing method provided by an embodiment of the present disclosure;
Fig. 9 is a fifth flowchart of an information processing method provided by an embodiment of the present disclosure;

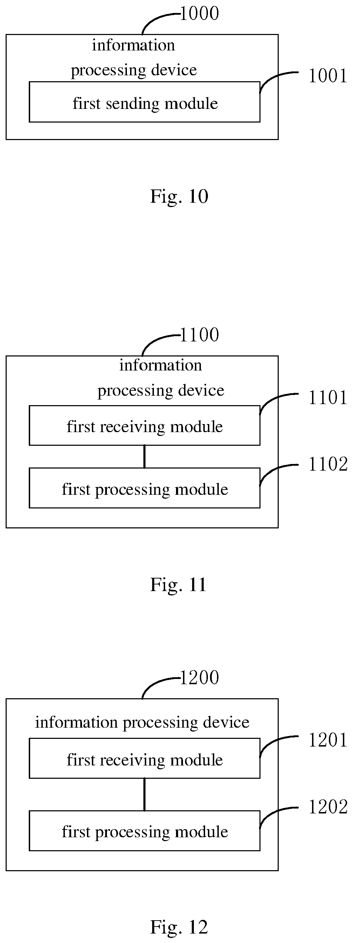

Fig. 10 is a schematic diagram of an information processing device provided by an embodiment of the present disclosure;
Fig. 11 is a second schematic diagram of an information processing device according to a second embodiment of the disclosure;
Fig. 12 is a third schematic diagram of an information processing device according to an embodiment of the disclosure;

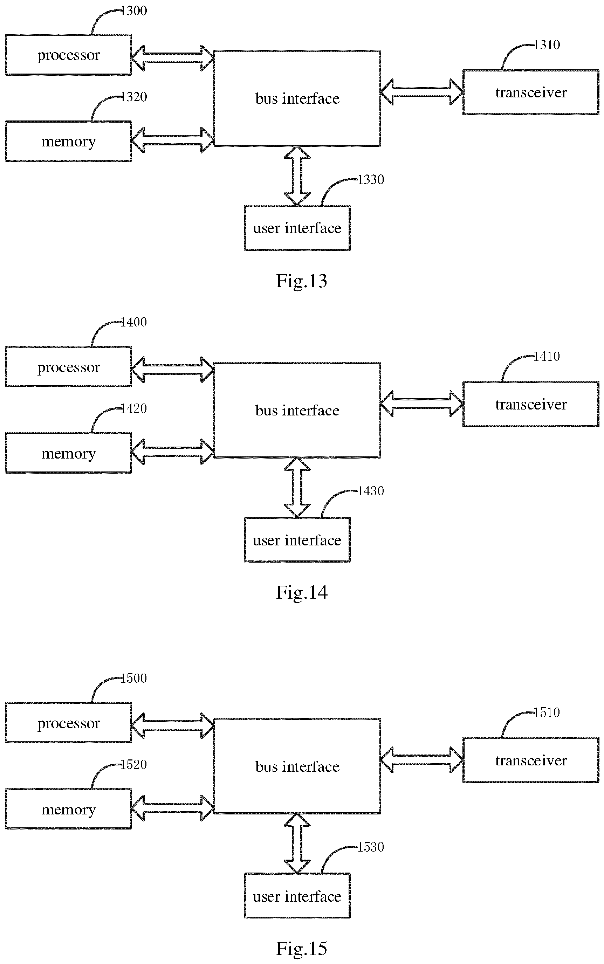

Fig. 13 is a first schematic diagram of an information processing apparatus provided by an embodiment of the present disclosure;
Fig. 14 is a second schematic diagram of an information processing apparatus provided in an embodiment of the present disclosure; and
Fig. 15 is a third schematic diagram of an information processing apparatus provided in an embodiment of the present disclosure

### DETAILED DESCRIPTION

The technical solutions in the embodiments of the present disclosure will be described clearly and completely with reference to the accompanying drawings in the embodiments of the present disclosure, and it is to be understood that the described embodiments are only some embodiments, but not all embodiments, of the present disclosure. All other embodiments, which can be derived by a person skilled in the art from the embodiments disclosed herein without inventive step, are intended to be within the scope of the present disclosure.

Referring to Fig. 5, Fig. 5 is a flowchart of an information processing method provided in the embodiment of the present disclosure, which is applied to a first relay UE, and as shown in Fig. 5, the method includes the following steps:
step 501, sending assistant information to a second relay UE through a direct communication interface, where the assistant information is configured to enable the second relay UE to enable or disable a relay function of the second relay UE.

In a network of UE-to-network relay, any relay UE may serve as a first relay UE, and other relay UEs that can receive the assistant information are second relay UEs. That is, in a network of UE-to-network relays, any one relay UE may transmit assistant information to other relay UEs or receive assistant information transmitted by other relay UEs.

In this embodiment, to further facilitate the second relay UE determining whether to enable or disable the relay function, the assistant information includes one or more of the following information:
location information of the first relay UE;
a moving speed of the first relay UE;
a power of the first relay UE;
a load of the first relay UE;
a relay intention of the first relay UE;
identification information of a target relay UE;
information about the target relay UE enabling or disabling a relay function;
the target relay UE is a relay UE of which the relay function is indicated by the first relay UE to be enabled or disabled.

The first relay UE may determine information of the target UE by using its own algorithm, for example, the first relay UE may arbitrarily select the target relay UE from the relay UEs around the first relay UE.

The relay intention refer to whether the relay UE is willing to continue to operate as the relay UE.

The first relay UE may send the assistant information to the second relay UE through a direct communication interface if one or more of the following triggering conditions are met. The triggering conditions includes:
a distance of a location change of the first relay UE exceeds a first threshold;
a change in a moving speed of the first relay UE exceeds a second threshold;
the power of the first relay UE is lower than a third threshold;
a change in the power of the first relay UE exceeds a fourth threshold;
a relay intention of the first relay UE is changed;
identification information of a target relay UE is changed;
information about a target relay UE enabling or disabling a relay function is changed; a period of sending the assistant information is satisfied.

The "change" mentioned in the above triggering conditions is a change between a value (or state) of certain information at the current time (that is, the time when it is determined whether the triggering conditions is met) and a value (or state) of the information at the last reporting time of the assistant information.

For example, "the location change of the first relay UE" refers to comparing the location of the first relay UE at the current time with the location of the first relay UE at the last time of reporting the assistant information. The location may be a zone ID, or latitude and longitude coordinates, or a serving base station, etc.

For another example, whether the relay intention of the first relay UE has changed means whether the relay intention of the first relay UE has changed from the relay intention of the first relay UE at the previous assistant information reporting time. For example, the relay will at the time of reporting the assistant information last time is that the first relay UE is willing to continue to operate as the relay UE, and at the current time, the relay will of the first relay UE changes to be unwilling to continue to operate as the relay UE, so that it may be considered that the relay will of the first relay UE has changed, and a triggering conditions is formed.

For another example, the fact that the identification information of a target relay UE is changed means whether the identification information of a target relay UE at the current time is changed from the identification information of a target relay UE at the previous reporting time of the assistant information. For example, the target relay UE at the time of reporting the assistant information last time is the relay UE1, and the information of the target UE at the current time is the relay UE2, so that it may be considered that the identification information of a target relay UE is changed, and a triggering conditions is formed.

For another example, the change of the information on enabling or off the relay function of the target relay UE means whether the information on enabling or off the relay function of the target UE at the current time is changed from the information on enabling or off the relay function of the target relay UE at the previous time of reporting the assistant information. For example, the target relay UE at the time of the last reporting of the assistant information needs to start the relay function, and the target relay UE needs to close the relay function at the current time, so that it can be considered that the information of enabling or disabling the relay function of the target relay UE changes, and a triggering conditions is formed.

The sending the assistant information to the second relay UE through the direct communication interface specifically includes:
transmitting the assistant information to the second relay UE through a direct communication interface if the triggering conditions is satisfied and if a direct communication interface has available resources; alternatively, the assistant information is transmitted to the second relay UE through a direct communication interface, if the triggering conditions is satisfied and if the direct communication interface has a dedicated resource available for transmitting the assistant information.
The period of the assistant information transmission is configured by the network side or the period of the assistant information transmission is preconfigured; the dedicated resource for sending the assistant information is configured by a network side or the dedicated resource for sending the assistant information is preconfigured.

Here, the term "preconfigured" means written in the UE in advance, or may be protocol-agreed, etc.

In the embodiment of the present disclosure, the relay UE may dynamically enable or disable the relay function based on the assistant information, so that the power consumption of the relay UE may be reduced.

Referring to Fig. 6, Fig. 6 is a flowchart of an information processing method provided in the embodiment of the present disclosure, which is applied to a second relay UE, and as shown in Fig. 6, the method includes the following steps:
step 601, receiving assistant information sent by first relay UE through a direct communication interface.
   The content of the assistant information may refer to the description of the foregoing embodiments.
step 602, disabling a relay function of the second relay UE according to the assistant information, or enabling the relay function of the second relay UE according to the assistant information.

Specifically, in this step, the relay function is disabled in the case that it is determined that the relay turn-off requirement is satisfied according to the assistant information; and under the condition that the relay opening requirement is determined to be met according to the assistant information, the relay function is opened.

The determining whether the relay disabling requirement or the relay opening requirement is met or not according to the algorithm of the first relay UE. For example, the relay shutdown requirement may be: a large number of low-load and low-speed relay UEs are around the second relay UE. Specifically, the second relay UE determines that there are a large number of low-load and low-speed relay UEs around the current second relay UE according to the assistant information, and then determines that the relay function can be disabled. Similarly, the relay turn-on requirement may be: the number of relay UEs in the periphery of the second relay UE is small or the periphery relay UEs are high-load and high-speed relay UEs. Specifically, the second relay UE determines whether to start the relay function based on the assistant information and by combining with its own algorithm, for example, if the number of relay UEs around the second relay UE is small or the number of peripheral relay UEs is high-load and high-speed relay UEs, it is determined that the relay function can be enabled.

Optionally, the disabling the relay function may include any one of the following situations:
(1) immediately disabling the relay function.
(2) generating a random number in [M, N]; in a case that the random number is less than or equal to a preset threshold P, or in a case that the random number is greater than or equal to the preset threshold P, disabling the relay function; where M >0, N >0, P >0, M < P < N.

For example, a random number within [0, 1] is generated. If the random number is less than 0.5, the relay function is closed; otherwise, the relay function is kept on.

In the embodiment of the present disclosure, the manner of generating the random number is not limited. By means of generating the random number, the relay UE can be prevented from disabling the relay function at the same time, and therefore smooth communication is guaranteed.

In order to ensure smooth communication, before determining to disable the relay function, the method may further include: and sending a first message to a target UE, where the first message is configured to notify the target UE to perform a relay reselection.

Optionally, the enabling of the relay function may include any one of the following situations:
(1) immediately enabling a relay function.
(2) in a case that a relay enabling condition configured by the network side is met, immediately enabling the relay function. The relay start condition configured on the network side may be, for example, a certain channel quality threshold. Then, when the channel quality threshold configured on the network side is met, the relay function can be enabled immediately.
(3) generating a random number in [M, N]; in a case that the random number is less than or equal to a preset threshold P, or in a case that the random number is greater than or equal to the preset threshold P, enabling the relay function.
   For example, a random number within [0, 1] is generated. If the random number is less than 0.5, the relay function is turned on.
(4) generating a random number in [M, N] in a case that a relay enabling condition configured by the network side is met; in a case that the random number is less than or equal to a preset threshold P, or in a case that the random number is greater than or equal to the preset threshold P, enabling the relay function.

The relay start condition configured on the network side may be, for example, a certain channel quality threshold. Then, when the channel quality threshold configured on the network side is satisfied, a random number in [0, 1] is generated. If the random number is less than 0.5, the relay function is turned on.

M >0, N >0, P >0, M < P < N.

In the embodiment of the present disclosure, the relay UE may dynamically enable or disable the relay function based on the assistant information, so that the power consumption of the relay UE may be reduced.

On the basis of the above embodiments, in order to facilitate communication of other UEs, the method further includes at least one of the following steps:
step 603, the second relay UE sending a broadcast message, where the broadcast message is configured to indicate that the relay function is enabled.
step 604, the second relay UE receiving a relay request message. Specifically, the second relay UE receives relay requests of other remote UEs.
step 605, the second relay UE sending the assistant information of the second relay UE to other relay UEs.

It should be noted that the three steps 603-605 are not in strict sequence, and in practical applications, any one or a combination of multiple steps may be included. Referring to Fig. 7, Fig. 7 is a flowchart of an information processing method provided in an embodiment of the present disclosure, and is applied to a UE (remote UE), as shown in Fig. 7, including the following steps:
step 701, receiving a first message sent by a second relay UE.
step 702, performing a relay reselection according to the first message.

The first message is sent by the second relay UE before the relay function is disabled according to the assistant information sent by the first relay UE. The meaning of the assistant information can refer to the description of the foregoing embodiments.

In the embodiment of the present disclosure, the relay UE may dynamically enable or disable the relay function based on the assistant information, so that the power consumption of the relay UE may be reduced.

In the embodiments of the present disclosure, to solve the problems in the related art, a method for dynamically enabling or off a relay function of a relay UE is provided. The relay monitors assistant information sent by other relays on a direct communication interface, and the relay function is enabled or closed based on the assistant information.

Referring to Fig. 8, Fig. 8 is a schematic diagram of a process of disabling a relay function according to assistant information according to an embodiment of the present disclosure, including:
step 801, the relay UE transmits the assistant information.

In this step, each Relay UE (Relay UE1, Relay UE2, Relay UE3 are shown in the figure) broadcasts the assistant information on the direct communication interface. The content of the assistant information sent by the relay UE includes, but is not limited to, one or a combination of the following:
(1) the location of the relay UE.
   Specifically, the location of the relay UE may be, but is not limited to, a zone ID (zone identifier), or latitude and longitude coordinates, or a serving base station, etc.
(2) a moving speed of the relay UE.
   Specifically, the moving speed of the relay may be, but is not limited to, an absolute value, or a quantized value, or a high/medium/low speed level.
(3) a power of the relay UE.
   Specifically, the relay power may be a percentage of the current power to the terminal power.
(4) a load of the relay UE.
   Specifically, the terminal load may be the number of currently served UEs or the number or percentage of time/frequency resources occupied by data of the served UEs.
(5) a relay intention of the first relay UE.
   Specifically, relay intention refers to whether a relay is willing to continue to operate as a relay.

In the embodiment of the present disclosure, the triggering conditions for sending the assistant information of the relay UE may be based on event trigger or periodic trigger:
(1) The specific event triggered by the event can be one or a combination of the following events:
   a distance of a location change of the first relay UE exceeds a threshold;
   a change in a moving speed of the relay UE exceeds a threshold;
   the power of the relay UE is lower than a threshold;
   the load change of the relay UE exceeds a threshold;
   change in intention to relay the UE;
(2) the period of the periodic trigger may be configured or preconfigured by the network.

In the embodiment of the present disclosure, the transmission time of the assistant information of the relay UE may have the following forms:
A. immediately sending the assistant information after the triggering conditions of the assistant information is met and under the condition ththrough the direct communication interface has available resources;
B. and after the triggering conditions of the assistant information is met, the assistant information is required to be sent until the direct communication interface has a special resource for sending the assistant information, where the special resource for sending the assistant information is configured or preconfigured by the network.

Step 802, the relay UE determines whether to disable a relay function according to the received assistant information.

The relay UE judges whether to close the relay function based on the assistant information and combining with the algorithm of the relay UE, for example, if a large amount of low-load and low-speed relays are arranged around the relay UE, the relay UE can be judged to close the relay function.

After the relay UE determines that the relay shutdown condition is satisfied based on the assistant information, the specific operation of the relay UE may be one of the following operations:
(1) immediately disabling the relay function;
(2) disabling the relay function according to a certain probability.03

For example, a random number between [0,1] is generated, and if the random number is less than 0.5, the relay function is closed; otherwise, the relay function is kept on. The reason for disabling the relays according to the random number is to avoid that a large number of relays are disabled at the same time.

Step 803, the relay UE decides to disable the relay function and notifies the served UE to perform relay reselection

After the relay UE determines to disable the relay function, the following operations need to be performed: sending a message to the UE (UE 1 in the figure) served by itself, informing the UE to perform relay reselection.

Referring to Fig. 9, Fig. 9 is a schematic diagram of a process of enabling a relay function according to assistant information according to an embodiment of the present disclosure, including:
step 901, the relay UE sends the assistant information.

In this step, each Relay UE (Relay UE1, Relay UE2, Relay UE3 are shown in the figure) broadcasts the assistant information on the direct communication interface. The content of the assistant information sent by the relay UE includes, but is not limited to, one or a combination of the following:
(1) location information of the relay UE;.
   Specifically, the location of the relay UE may be, but is not limited to, a zone ID (zone identifier), or latitude and longitude coordinates, or a serving base station, etc.
(2) a moving speed of the relay UE.
   Specifically, the moving speed of the relay may be, but is not limited to, an absolute value, or a quantized value, or a high/medium/low speed level.
(3) a power of the relay UE.
   Specifically, the relay power may be a percentage of the current power to the terminal power.
(4) a load of the relay UE.
   Specifically, the terminal load may be the number of currently served UEs or the number or percentage of time/frequency resources occupied by data of the served UEs.
(5) a relay intention of the relay UE.
   Specifically, relay intention refers to whether a relay is willing to continue to operate as a relay.

In the embodiment of the present disclosure, the triggering conditions for sending the assistant information of the relay UE may be based on event trigger or periodic trigger:
(1) the specific event triggered by the event can be one or a combination of the following events:
   the position change of the relay UE exceeds a threshold;
   the moving speed change of the relay UE exceeds a threshold;
   the electric quantity of the relay UE is lower than a threshold or the electric quantity change exceeds the threshold;
   the load change of the relay UE exceeds a threshold;
   change in intention to relay the UE;
(2) the period of the periodic trigger may be configured or preconfigured by the network.

In the embodiment of the present disclosure, the transmission time of the assistant information of the relay UE may have the following forms:
A. immediately sending the assistant information after the triggering conditions of the assistant information is met and under the condition ththrough the direct communication interface has available resources;
B. and after the triggering conditions of the assistant information is met, the assistant information is required to be sent until the direct communication interface has a special resource for sending the assistant information, where the special resource for sending the assistant information is configured or preconfigured by the network.

step 902, the relay UE determines whether to enable a relay function according to the received assistant information.

The relay UE judges whether to start the relay function based on the assistant information and by combining with the algorithm of the relay UE, for example, if a large amount of high-load and high-speed relays are around, the relay function can be enabled.

After the relay UE determines that the relay start condition is satisfied based on the assistant information, the specific operation of the relay UE may be one of the following operations:
(1) immediately enabling a relay function;
(2) immediately enabling a relay function after meeting a channel quality threshold configured by a network;
(3) enabling a relay function according to a certain probability, for example, generating a random number between [0,1], and if the random number is less than 0.5, enabling the relay function; otherwise, the switch is not turned on.
(4) And after the channel quality threshold configured by the network is met, enabling a relay function according to a certain probability. Such as generating random numbers between 0, 1. If the random number is less than 0.5, enabling a relay function; otherwise, the switch is not turned on.

step 903, after the relay opens the relay function, if the relay function is used, the relay UE may start broadcasting a relay notification message or receive a relay request message sent by the remote UE.

step 904, after the relay starts the relay function, it needs to send the assistant information to other relays to assist other relays to execute the on/off decision.

There is no strict precedence relationship between step 903 and step 904.

As can be seen from the above description of the embodiments, in the embodiments of the present disclosure, the relay UE may perform relay on/off according to the assistant information of other relay UEs, so as to implement power saving of the relay UE as much as possible.

The embodiment of the disclosure also provides an information processing device, which is applied to the first relay UE. Referring to Fig. 10, Fig. 10 is a block diagram of an information processing device provided in an embodiment of the present disclosure. Since the principle of solving the problem of the information processing device is similar to that of the information processing method in the embodiment of the present disclosure, the implementation of the information processing device may refer to the implementation of the method, and repeated descriptions are omitted.

As shown in Fig. 10, the information processing device 1000 includes: a first sending module 1001, configured to send, to a second relay UE, assistant information in a direct communication interface, where the assistant information is used to enable the second relay UE to turn on or disable a relay function of the second relay UE.

Optionally, the assistant information includes one or more of the following information:
location information of the first relay UE;
a moving speed of the first relay UE;
a power of the first relay UE;
a load of the first relay UE;
a relay intention of the first relay UE;
information of a target relay UE, the target relay UE specifying a relay UE that turns on a relay function or turns off the relay function for the first relay UE.
Optionally, the first sending module 1001 is specifically configured to send the assistant information to the second relay UE in a direct communication interface when one or more of the following triggering conditions are met;
where the triggering conditions includes:
   a distance of a location change of the first relay UE exceeds a first threshold;
   a change in a moving speed of the first relay UE exceeds a second threshold;
   the power of the first relay UE is lower than a third threshold;
   a change in the power of the first relay UE exceeds a fourth threshold;
   a relay intention of the first relay UE is changed;
   the identification information of a target relay UE is changed;
   the information that the target relay UE turns on or off the relay function is changed;
   the period of sending the assistant information is satisfied.

Optionally, the first sending module 1001 is specifically configured to send the assistant information to the second relay UE on the direct communication interface when the triggering conditions is met and the direct communication interface has available resources; alternatively, the assistant information is transmitted to the second relay UE through a direct communication interface, if the triggering conditions is satisfied and if the direct communication interface has a dedicated resource available for transmitting the assistant information.

Optionally, the period for sending the assistant information is configured by a network side or is preconfigured; the dedicated resource for sending the assistant information is configured by a network side or the dedicated resource for sending the assistant information is preconfigured.

The device provided in the embodiment of the present disclosure may implement the method embodiments, and the implementation principle and technical effects are similar, which are not described herein again.

The embodiment of the disclosure also provides an information processing device, which is applied to the second relay UE. Referring to Fig. 11, Fig. 11 is a structural diagram of an information processing device provided in an embodiment of the present disclosure. Since the principle of solving the problem of the information processing device is similar to that of the information processing method in the embodiment of the present disclosure, the implementation of the information processing device may refer to the implementation of the method, and repeated descriptions are omitted.

As shown in Fig. 11, the information processing device 1100 includes: a first receiving module 1101, configured to receive, through a direct communication interface, assistant information sent by a first relay UE; a first processing module 1102, configured to close a relay function of the second relay UE according to the assistant information, or open the relay function of the second relay UE according to the assistant information.

Optionally, the assistant information includes one or more of the following information:
location information of the first relay UE;
a moving speed of the first relay UE;
a power of the first relay UE;
a load of the first relay UE;
a relay intention of the first relay UE;
information of a target relay UE, the target relay UE specifying a relay UE that turns on a relay function or turns off the relay function for the first relay UE.

Optionally, the first processing module 1102 is specifically configured to, in a case that it is determined that the relay shutdown requirement is met according to the assistant information, shutdown the relay function; and under the condition that the relay opening requirement is determined to be met according to the assistant information, the relay function is opened.

Optionally, the first processing module 1102 is specifically configured to: immediately disabling the relay function; or
Generating a random number in [M, N]; if the random number is less than or equal to a preset threshold P, or if the random number is greater than or equal to the preset threshold P, disabling the relay function; where M >0, N >0, P >0, M < P < N.

Optionally, the device further includes: a first sending module, configured to send a first message to a target UE, where the first message is used to notify the target UE to perform relay reselection.
Optionally, the first processing module 1102 is specifically configured to: immediately enabling a relay function; or
Under the condition of meeting the relay enabling condition configured on the network side, immediately enabling a relay function; or
Generating a random number in [M, N]; if the random number is less than or equal to a preset threshold P, or if the random number is greater than or equal to the preset threshold P, enabling a relay function; or
Generating a random number in [M, N] under the condition of meeting the relay enabling condition configured on the network side; if the random number is less than or equal to a preset threshold P, or if the random number is greater than or equal to the preset threshold P, enabling a relay function;
where M >0, N >0, P >0, M < P < N.

Optionally, the device may further include:
a second sending module, configured to send a broadcast message when the relay function is enabled, where the broadcast message is used to instruct the relay function to start;
the second receiving module is used for receiving the relay request message under the condition of enabling the relay function;
a third sending module, configured to send the assistant information of the second relay UE to another relay UE when the relay function is turned on.

The device provided in the embodiment of the present disclosure may implement the method embodiments, and the implementation principle and technical effects are similar, which are not described herein again.

The embodiment of the disclosure also provides an information processing device, which is applied to the UE. Referring to Fig. 12, Fig. 12 is a block diagram of an information processing device provided in an embodiment of the present disclosure. Since the principle of solving the problem of the information processing device is similar to that of the information processing method in the embodiment of the present disclosure, the implementation of the information processing device may refer to the implementation of the method, and repeated descriptions are omitted.

As shown in Fig. 12, the information processing device 1200 includes: a first receiving module 1201, configured to receive a first message sent by a second relay UE; a first processing module 1202, configured to perform relay reselection according to the first message; where the first message is sent by the second relay UE before the relay function is disabled according to the assistant information sent by the first relay UE.

The device provided in the embodiment of the present disclosure may implement the method embodiments, and the implementation principle and technical effects are similar, which are not described herein again.

As shown in Fig. 13, a communication device according to an embodiment of the present disclosure is applied to a first relay UE, and includes: a processor 1300, for reading the program in the memory 1320, the processor is configured to read the program in the memory to perform:
sending assistant information to a second relay UE through a direct communication interface, where the assistant information is configured to enable the second relay UE to enable or disable a relay function of the second relay UE.

A transceiver 1310 for receiving and transmitting data under the control of the processor 1300.

In Fig. 13, among other things, the bus architecture may include any number of interconnected buses and bridges, with one or more processors, represented by the processor 1300, and various circuits, represented by the memory 1320, being linked together. The bus architecture may also link together various other circuits such as peripherals, voltage regulators, power management circuits, and the like, which are well known in the art, and therefore, will not be described any further herein. The bus interface provides an interface. The transceiver 1310 can be a number of elements including a transmitter and receiver that provide a means for communicating with various other device over a transmission medium. User interface 1330 may also be an interface capable of interfacing with a desired device for different user devices, including but not limited to a keypad, display, speaker, microphone, joystick, etc. The processor 1300 is responsible for managing the bus architecture and general processing, and the memory 1320 may store data used by the processor 1300 in performing operations.

The assistant information includes one or more of the following information:
location information of the first relay UE;
a moving speed of the first relay UE;
a power of the first relay UE;
a load of the first relay UE;
a relay intention of the first relay UE;
information of a target relay UE, the target relay UE specifying a relay UE that turns on a relay function or turns off the relay function for the first relay UE.

The processor 1300 is further configured to read the program and execute the following steps:
transmitting the assistant information to the second relay UE through a direct communication interface if one or more of the following triggering conditions are met;
where the triggering conditions includes:
   a distance of a location change of the first relay UE exceeds a first threshold;
   a change in a moving speed of the first relay UE exceeds a second threshold;
   the power of the first relay UE is lower than a third threshold;
   a change in the power of the first relay UE exceeds a fourth threshold;
   a relay intention of the first relay UE is changed;
   identification information of a target relay UE is changed;
   information about a target relay UE enabling or disabling a relay function is changed; a period of sending the assistant information is satisfied.

The processor 1300 is further configured to read the program and execute the following steps:
sending the assistant information to the second relay UE through the direct communication interface in a case that the triggering condition is satisfied and the direct communication interface has available resources; or
sending the assistant information to the second relay UE through the direct communication interface in a case that the triggering condition is satisfied and the direct communication interface has a dedicated resource available for sending the assistant information.

The period of the assistant information transmission is configured by the network side or the period of the assistant information transmission is preconfigured;
the dedicated resource for sending the assistant information is configured by a network side or the dedicated resource for sending the assistant information is preconfigured.

As shown in Fig. 13, an information processing device according to an embodiment of the present disclosure is applied to a first relay UE, and includes: a processor 1300, for reading the program in the memory 1320, the processor is configured to read the program in the memory to perform:
sending assistant information to a second relay UE through a direct communication interface, where the assistant information is configured to enable the second relay UE to enable or disable a relay function of the second relay UE.

A transceiver 1310 for receiving and transmitting data under the control of the processor 1300.

In Fig. 13, among other things, the bus architecture may include any number of interconnected buses and bridges, with one or more processors, represented by the processor 1300, and various circuits, represented by the memory 1320, being linked together. The bus architecture may also link together various other circuits such as peripherals, voltage regulators, power management circuits, and the like, which are well known in the art, and therefore, will not be described any further herein. The bus interface provides an interface. The transceiver 1310 can be a number of elements including a transmitter and receiver that provide a means for communicating with various other device over a transmission medium. User interface 1330 may also be an interface capable of interfacing with a desired device for different user devices, including but not limited to a keypad, display, speaker, microphone, joystick, etc. The processor 1300 is responsible for managing the bus architecture and general processing, and the memory 1320 may store data used by the processor 1300 in performing operations.

As shown in Fig. 14, an information processing device according to an embodiment of the present disclosure is applied to a second relay UE, and includes: the processor 1400 is used for reading the program in the memory 1420 and executing the following processes:
receiving assistant information sent by first relay UE through a direct communication interface; and
disabling a relay function of the second relay UE according to the assistant information, or enabling the relay function of the second relay UE according to the assistant information.

A transceiver 1410 for receiving and transmitting data under the control of the processor 1400.

In Fig. 14, the bus architecture may include any number of interconnected buses and bridges, particularly one or more processors, represented by processor 1400, and various circuits, represented by memory 1420, linked together. The bus architecture may also link together various other circuits such as peripherals, voltage regulators, power management circuits, and the like, which are well known in the art, and therefore, will not be described any further herein. The bus interface provides an interface. The transceiver 1410 may be a plurality of elements including a transmitter and a receiver providing a means for communicating with various other device over a transmission medium. For different user devices, the user interface 1430 may also be an interface capable of interfacing externally to the desired device, including but not limited to a keypad, display, speaker, microphone, joystick, etc.

The processor 1400 is responsible for managing the bus architecture and general processing, and the memory 1420 may store data used by the processor 1400 in performing operations.

The assistant information includes one or more of the following information:
location information of the first relay UE;
a moving speed of the first relay UE;
a power of the first relay UE;
a load of the first relay UE;
a relay intention of the first relay UE;
information of a target relay UE, the target relay UE specifying a relay UE that turns on a relay function or turns off the relay function for the first relay UE.

The processor 1400 is further configured to read the program and execute the following steps:
under the condition that the relay disabling requirement is determined to be met according to the assistant information, the relay function is closed;
and under the condition that the relay opening requirement is determined to be met according to the assistant information, the relay function is opened.

The processor 1400 is further configured to read the program and execute the following steps:
immediately disabling the relay function; or
generating a random number in [M, N]; if the random number is less than or equal to a preset threshold P, or if the random number is greater than or equal to the preset threshold P, disabling the relay function; where M >0, N >0, P >0, M < P < N.

The processor 1400 is further configured to read the program and execute the following steps:
sending a first message to a target UE, where the first message is configured to notify the target UE to perform a relay reselection.

The processor 1400 is further configured to read the program and execute the following steps:
immediately enabling a relay function; or
Under the condition of meeting the relay enabling condition configured on the network side, immediately enabling a relay function; or
Generating a random number in [M, N]; if the random number is less than or equal to a preset threshold P, or if the random number is greater than or equal to the preset threshold P, enabling a relay function; or
Generating a random number in [M, N] under the condition of meeting the relay enabling condition configured on the network side; if the random number is less than or equal to a preset threshold P, or if the random number is greater than or equal to the preset threshold P, enabling a relay function;
where M >0, N >0, P >0, M < P < N.

The processor 1400 is further configured to read the program, and perform at least one of the following:
sending a broadcast message, where the broadcast message is configured to indicate the relay function to be enabled;
receiving a relay request message;
transmitting the assistant information of the second relay UE to other relay UEs.

As shown in Fig. 15, an information processing device according to an embodiment of the present disclosure is applied to a second relay UE, and includes: the processor 1500 is used for reading the program in the memory 1520 and executing the following processes:
receiving a first message sent by a second relay UE;
performing relay reselection according to the first message;
where the first message is transmitted by the second relay UE before the relay function is disabled according to the assistant information transmitted by the first relay UE.

The transceiver 1510 is used to receive and transmit data under the control of the processor 1500.

In Fig. 15, among other things, the bus architecture may include any number of interconnected buses and bridges, with one or more processors represented by processor 1500 and various circuits of memory represented by memory 1520 being linked together. The bus architecture may also link together various other circuits such as peripherals, voltage regulators, power management circuits, and the like, which are well known in the art, and therefore, will not be described any further herein. The bus interface provides an interface. The transceiver 1510 may be a plurality of elements including a transmitter and a receiver that provide a means for communicating with various other device over a transmission medium. The user interface 1530 may also be an interface capable of interfacing with a desired device for different user devices, including but not limited to a keypad, display, speaker, microphone, joystick, etc.

The processor 1500 is responsible for managing the bus architecture and general processing, and the memory 1520 may store data used by the processor 1500 in performing operations.

Furthermore, a computer-readable storage medium of an embodiment of the present disclosure stores a computer program executable by a processor to implement the steps of:
sending assistant information to a second relay UE through a direct communication interface, where the assistant information is configured to enable the second relay UE to enable or disable a relay function of the second relay UE.

The assistant information includes one or more of:
location information of the first relay UE;
a moving speed of the first relay UE;
a power of the first relay UE;
a load of the first relay UE;
a relay intention of the first relay UE;
identification information of a target relay UE;
information about a target relay UE enabling or disabling a relay function;
where the target relay UE is a relay UE of which the relay function is indicated by the first relay UE to be enabled or disabled.

The sending the assistant information to the second relay UE through the direct communication interface includes:
sending the assistant information to the second relay UE through the direct communication interface in a case that one or more of the following triggering conditions are met;
where the triggering conditions include:
   a distance of a location change of the first relay UE exceeds a first threshold;
   a change in a moving speed of the first relay UE exceeds a second threshold;
   the power of the first relay UE is lower than a third threshold;
   a change in the power of the first relay UE exceeds a fourth threshold;
   a relay intention of the first relay UE is changed;
   identification information of a target relay UE is changed;
   information about a target relay UE enabling or disabling a relay function is changed; a period of sending the assistant information is satisfied.

The sending the assistant information to the second relay UE through the direct communication interface includes:
sending the assistant information to the second relay UE through the direct communication interface in a case that the triggering condition is satisfied and the direct communication interface has available resources; or
sending the assistant information to the second relay UE through the direct communication interface in a case that the triggering condition is satisfied and the direct communication interface has a dedicated resource available for sending the assistant information.

The period for sending the assistant information is configured by a network side or preconfigured;
the dedicated resource for sending the assistant information is configured by a network side or the dedicated resource for sending the assistant information is preconfigured.

Furthermore, a computer-readable storage medium of an embodiment of the present disclosure stores a computer program executable by a processor to implement the steps of:
receiving assistant information sent by first relay UE through a direct communication interface; and
disabling a relay function of the second relay UE according to the assistant information, or enabling the relay function of the second relay UE according to the assistant information.

The assistant information includes one or more of:
location information of the first relay UE;
a moving speed of the first relay UE;
a power of the first relay UE;
a load of the first relay UE;
a relay intention of the first relay UE;
identification information of a target relay UE;
information about a target relay UE enabling or disabling a relay function;
where the target relay UE is a relay UE of which the relay function is indicated by the first relay UE to be enabled or disabled.

The disabling the relay function of the second relay UE according to the assistant information includes:
in a case that a requirement of relay disabling is determined to be met according to the assistant information, disabling the relay function;
the enabling the relay function of the second relay UE according to the assistant information includes:
   in a case that a requirement of relay enabling is determined to be met according to the assistant information, enabling the relay function.

The disabling the relay functionality includes:
immediately disabling the relay function; or
generating a random number in [M, N]; in a case that the random number is less than or equal to a preset threshold P, or in a case that the random number is greater than or equal to the preset threshold P, disabling the relay function; where M >0, N >0, P >0, M < P < N.

Prior to the disabling the relay function of the second relay UE according to the assistant information, the method further includes:
sending a first message to a target UE, where the first message is configured to notify the target UE to perform a relay reselection.

The enabling the relay function includes:
immediately enabling a relay function;
in a case that a relay enabling condition configured by the network side is met, immediately enabling the relay function; or
generating a random number in [M, N]; in a case that the random number is less than or equal to a preset threshold P, or in a case that the random number is greater than or equal to the preset threshold P, enabling the relay function; or
generating a random number in [M, N] in a case that a relay enabling condition configured by the network side is met; in a case that the random number is less than or equal to a preset threshold P, or in a case that the random number is greater than or equal to the preset threshold P, enabling the relay function;
where M >0, N >0, P >0, M < P < N.

In a case that the relay function is enabled, the method further includes at least one of: sending a broadcast message, where the broadcast message is configured to indicate that the relay function is enabled;
receiving a relay request message;
sending the assistant information of the second relay UE to other relay UEs.

Furthermore, a computer-readable storage medium of an embodiment of the present disclosure stores a computer program executable by a processor to implement the steps of:
receiving a first message sent by a second relay UE;
performing a relay reselection according to the first message;
where the first message is sent by the second relay UE before the relay function is disabled according to the assistant information sent by the first relay UE.

In the several embodiments provided in the present application, it should be understood that the disclosed method and device may be implemented in other manners. For example, the above-described device embodiments are merely illustrative, and for example, the division of the units is only one type of logical functional division, and other divisions may be realized in practice, for example, multiple units or components may be combined or integrated into another system, or some features may be omitted, or not executed. In addition, the shown or discussed mutual coupling or direct coupling or communication connection may be an indirect coupling or communication connection through some interfaces, devices or units, and may be in an electrical, mechanical or other form.

In addition, functional units in the embodiments of the present disclosure may be integrated into one processing unit, or each unit may be separately and physically included, or two or more units may be integrated into one unit. The integrated unit may be implemented in the form of hardware, or in the form of hardware plus a software functional unit.

The integrated unit implemented in the form of a software functional unit may be stored in a computer-readable storage medium. The software functional unit is stored in a storage medium and includes several instructions to enable a computer device (which may be a personal computer, a server, or a network device) to perform some steps of the transceiving method according to various embodiments of the present disclosure. And the aforementioned storage medium includes: a U-disk, a removable hard disk, a Read-Only Memory (ROM), a Random Access Memory (RAM), a magnetic disk, an optical disk, or other various media capable of storing program codes.

While the foregoing is directed to alternative embodiments of the present disclosure, it will be appreciated by those skilled in the art that various changes and modifications may be made therein without departing from the principles of the disclosure, and it is intended that such changes and modifications be covered by the scope of the disclosure.

## Claims

1. An information processing method, applied to a first relay User Equipment (UE) and comprising:
sending assistant information to a second relay UE through a direct communication interface, wherein the assistant information is configured to enable the second relay UE to enable or disable a relay function of the second relay UE.

2. The method according to claim 1, wherein the assistant information comprises one or more of:
location information of the first relay UE;
a moving speed of the first relay UE;
a power of the first relay UE;
a load of the first relay UE;
a relay intention of the first relay UE;
identification information of a target relay UE;
information about a target relay UE enabling or disabling a relay function;
wherein the target relay UE is a relay UE of which the relay function is indicated by the first relay UE to be enabled or disabled.

3. The method according to claim 1, wherein the sending the assistant information to the second relay UE through the direct communication interface comprises:
sending the assistant information to the second relay UE through the direct communication interface in a case that one or more of the following triggering conditions are met;
wherein the triggering conditions comprise:
a distance of a location change of the first relay UE exceeds a first threshold;
a change in a moving speed of the first relay UE exceeds a second threshold;
the power of the first relay UE is lower than a third threshold;
a change in the power of the first relay UE exceeds a fourth threshold;
a relay intention of the first relay UE is changed;
identification information of a target relay UE is changed;
information about a target relay UE enabling or disabling a relay function is changed;
a period of sending the assistant information is satisfied.

4. The method according to claim 3, wherein the sending the assistant information to the second relay UE through the direct communication interface comprises:
sending the assistant information to the second relay UE through the direct communication interface in a case that the triggering condition is satisfied and the direct communication interface has available resources; or
sending the assistant information to the second relay UE through the direct communication interface in a case that the triggering condition is satisfied and the direct communication interface has a dedicated resource available for sending the assistant information.

5. The method according to claim 3 or 4, wherein
the period for sending the assistant information is configured by a network side or preconfigured;
the dedicated resource for sending the assistant information is configured by a network side or the dedicated resource for sending the assistant information is preconfigured.

6. An information processing method, applied to a second relay UE and comprising:
receiving assistant information sent by first relay UE through a direct communication interface; and
disabling a relay function of the second relay UE according to the assistant information, or enabling the relay function of the second relay UE according to the assistant information.

7. The method according to claim 6, wherein the assistant information comprises one or more of:
location information of the first relay UE;
a moving speed of the first relay UE;
a power of the first relay UE;
a load of the first relay UE;
a relay intention of the first relay UE;
identification information of a target relay UE;
information about a target relay UE enabling or disabling a relay function;
wherein the target relay UE is a relay UE of which the relay function is indicated by the first relay UE to be enabled or disabled.

8. The method according to claim 6, wherein,
the disabling the relay function of the second relay UE according to the assistant information comprises:
in a case that a requirement of relay disabling is determined to be met according to the assistant information, disabling the relay function;
the enabling the relay function of the second relay UE according to the assistant information comprises:
in a case that a requirement of relay enabling is determined to be met according to the assistant information, enabling the relay function.

9. The method according to claim 8, wherein the disabling the relay functionality comprises:
immediately disabling the relay function; or
generating a random number in [M, N]; in a case that the random number is less than or equal to a preset threshold P, or in a case that the random number is greater than or equal to the preset threshold P, disabling the relay function; wherein M >0, N >0, P >0, M < P < N.

10. The method according to claim 6, wherein prior to the disabling the relay function of the second relay UE according to the assistant information, the method further comprises:
sending a first message to a target UE, wherein the first message is configured to notify the target UE to perform a relay reselection.

11. The method according to claim 8, wherein the enabling the relay function comprises:
immediately enabling a relay function;
in a case that a relay enabling condition configured by the network side is met, immediately enabling the relay function; or
generating a random number in [M, N]; in a case that the random number is less than or equal to a preset threshold P, or in a case that the random number is greater than or equal to the preset threshold P, enabling the relay function; or
generating a random number in [M, N] in a case that a relay enabling condition configured by the network side is met; in a case that the random number is less than or equal to a preset threshold P, or in a case that the random number is greater than or equal to the preset threshold P, enabling the relay function;
wherein M >0, N >0, P >0, M < P < N.

12. The method according to claim 6, wherein in a case that the relay function is enabled, the method further comprises at least one of:
sending a broadcast message, wherein the broadcast message is configured to indicate that the relay function is enabled;
receiving a relay request message;
sending the assistant information of the second relay UE to other relay UEs.

13. An information processing method, applied to UE and comprising:
receiving a first message sent by a second relay UE;
performing a relay reselection according to the first message;
wherein the first message is sent by the second relay UE before the relay function is disabled according to the assistant information sent by the first relay UE.

14. An information processing device, applied to a first relay UE and comprising:
a first sending module, configured to send assistant information to a second relay UE through a direct communication interface, wherein the assistant information is configured to enable the second relay UE to enable or disable a relay function of the second relay UE.

15. The device according to claim 14, wherein the assistant information comprises one or more of:
location information of the first relay UE;
a moving speed of the first relay UE;
a power of the first relay UE;
a load of the first relay UE;
a relay intention of the first relay UE;
identification information of a target relay UE;
information about a target relay UE enabling or disabling a relay function;
wherein the target relay UE is a relay UE of which the relay function is indicated by the first relay UE to be enabled or disabled.

16. An information processing device, applied to a second relay UE and comprising:
a first receiving module, configured to receive assistant information sent by first relay UE through a direct communication interface;
a first processing module, configured to disable a relay function of the second relay UE according to the assistant information, or enabling the relay function of the second relay UE according to the assistant information.

17. The device according to claim 16, wherein the assistant information comprises one or more of:
location information of the first relay UE;
a moving speed of the first relay UE;
a power of the first relay UE;
a load of the first relay UE;
a relay intention of the first relay UE;
identification information of a target relay UE;
information about a target relay UE enabling or disabling a relay function;
wherein the target relay UE is a relay UE of which the relay function is indicated by the first relay UE to be enabled or disabled.

18. An information processing method, applied to a UE and comprising:
a first receiving module, configured to receive a first message sent by a second relay UE;
a first processing module, configured to perform a relay reselection according to the first message;
wherein the first message is sent by the second relay UE before the relay function is disabled according to the assistant information sent by the first relay UE.

19. An information processing apparatus, applied to a first relay UE, comprising: a transceiver, a memory, a processor, and a program stored on the memory and executable on the processor;
the processor is configured to read the program in the memory to perform:
sending assistant information to a second relay UE through a direct communication interface, wherein the assistant information is configured to enable the second relay UE to enable or disable a relay function of the second relay UE.

20. The apparatus according to claim 19, wherein the assistant information comprises one or more of:
location information of the first relay UE;
a moving speed of the first relay UE;
a power of the first relay UE;
a load of the first relay UE;
a relay intention of the first relay UE;
identification information of a target relay UE;
information about a target relay UE enabling or disabling a relay function;
wherein the target relay UE is a relay UE of which the relay function is indicated by the first relay UE to be enabled or disabled.

21. The apparatus according to claim 19, wherein the processor is configured to read the program in the memory to perform:
sending the assistant information to the second relay UE through the direct communication interface in a case that one or more of the following triggering conditions are met;
wherein the triggering conditions comprise:
a distance of a location change of the first relay UE exceeds a first threshold;
a change in a moving speed of the first relay UE exceeds a second threshold;
the power of the first relay UE is lower than a third threshold;
a change in the power of the first relay UE exceeds a fourth threshold;
a relay intention of the first relay UE is changed;
identification information of a target relay UE is changed;
information about a target relay UE enabling or disabling a relay function is changed;
a period of sending the assistant information is satisfied.

22. The apparatus according to claim 21, wherein the processor is configured to read the program in the memory to perform:
sending the assistant information to the second relay UE through the direct communication interface in a case that the triggering condition is satisfied and the direct communication interface has available resources; or
sending the assistant information to the second relay UE through the direct communication interface in a case that the triggering condition is satisfied and the direct communication interface has a dedicated resource available for sending the assistant information.

23. The apparatus according to claim 21 or 22, wherein
the period for sending the assistant information is configured by a network side or preconfigured;
the dedicated resource for sending the assistant information is configured by a network side or the dedicated resource for sending the assistant information is preconfigured.

24. An information processing apparatus, applied to a second relay UE, comprising: a transceiver, a memory, a processor, and a program stored on the memory and executable on the processor;
the processor is configured to read the program in the memory to perform:
receiving assistant information sent by first relay UE through a direct communication interface; and
disabling a relay function of the second relay UE according to the assistant information, or enabling the relay function of the second relay UE according to the assistant information.

25. The apparatus according to claim 24, wherein the assistant information comprises one or more of:
location information of the first relay UE;
a moving speed of the first relay UE;
a power of the first relay UE;
a load of the first relay UE;
a relay intention of the first relay UE;
identification information of a target relay UE;
information about a target relay UE enabling or disabling a relay function;
wherein the target relay UE is a relay UE of which the relay function is indicated by the first relay UE to be enabled or disabled.

26. The apparatus according to claim 24, wherein the processor is configured to read the program in the memory to perform:
in a case that a requirement of relay disabling is determined to be met according to the assistant information, disabling the relay function;
in a case that a requirement of relay enabling is determined to be met according to the assistant information, enabling the relay function.

27. The apparatus according to claim 26, wherein the processor is configured to read the program in the memory to perform:
immediately disabling the relay function; or
generating a random number in [M, N]; in a case that the random number is less than or equal to a preset threshold P, or in a case that the random number is greater than or equal to the preset threshold P, disabling the relay function; wherein M >0, N >0, P >0, M < P < N.

28. The apparatus according to claim 24, wherein the processor is configured to read the program in the memory to perform:
sending a first message to a target UE, wherein the first message is configured to notify the target UE to perform a relay reselection.

29. The apparatus according to claim 26, wherein the processor is configured to read the program in the memory to perform:
immediately enabling a relay function;
in a case that a relay enabling condition configured by the network side is met, immediately enabling the relay function; or
generating a random number in [M, N]; in a case that the random number is less than or equal to a preset threshold P, or in a case that the random number is greater than or equal to the preset threshold P, enabling the relay function; or
generating a random number in [M, N] in a case that a relay enabling condition configured by the network side is met; in a case that the random number is less than or equal to a preset threshold P, or in a case that the random number is greater than or equal to the preset threshold P, enabling the relay function;
wherein M >0, N >0, P >0, M < P < N.

30. The apparatus according to claim 24, wherein the processor is further configured to read a program in the memory and perform at least one of:
sending a broadcast message, wherein the broadcast message is configured to indicate that the relay function is enabled;
receiving a relay request message;
sending the assistant information of the second relay UE to other relay UEs.

31. An information processing apparatus, applied to a UE, comprising: a transceiver, a memory, a processor, and a program stored on the memory and executable on the processor;
the processor is configured to read the program in the memory to perform:
receiving a first message sent by a second relay UE;
performing a relay reselection according to the first message;
wherein the first message is sent by the second relay UE before the relay function is disabled according to the assistant information sent by the first relay UE.

32. A computer-readable storage medium storing a computer program, wherein the computer program is executed by a processor to perform the information processing method according to any one of claims 1 to 5, or the information processing method according to any one of claims 6 to 12, or the information processing method according to claim 13.
